**Europäisches Patentamt**

**European Patent Office**

**Office européen des brevets**

(19)

(11) Numéro de publication : **0 134 371 B1**

(12) # FASCICULE DE BREVET EUROPÉEN

(45) Date de publication du fascicule du brevet :
**10.02.88**

(21) Numéro de dépôt : **83401778.2**

(22) Date de dépôt : **13.09.83**

(51) Int. Cl.⁴ : **A 01 C 7/04**, B 65 G 47/14

(54) **Procédé et dispositif de préhension, de transfert et de distribution un à un d'éléments de petite taille.**

(43) Date de publication de la demande :
**20.03.85 Bulletin 85/12**

(45) Mention de la délivrance du brevet :
**10.02.88 Bulletin 88/06**

(84) Etats contractants désignés :
**BE DE GB NL**

(56) Documents cités :
**EP-A- 0 036 215**
**FR-A- 2 138 893**
**US-A- 4 112 777**

(73) Titulaire : **Germaine, Michel**
**3, Sente des Bûcherons**
**F-76350 Oissel (FR)**

(72) Inventeur : **Germaine, Michel**
**3, Sente des Bûcherons**
**F-76350 Oissel (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

**Description**

La présente invention se rapporte à un dispositif de préhension, de transfert et de distribution un à un d'éléments de très faible taille, notamment de graines à semer, consistant à retenir un élément parmi une multitude d'éléments en vrac, en position de préhension, par l'effet d'aspiration d'une source de dépression contre au moins un trou d'un organe de préhension, et à le transférer par ledit organe à une position de distribution ou ledit élément est libéré par suppression de l'effet d'aspiration.

Le problème consistant à prélever des éléments solides de très faible taille dans un récipient contenant une multitude de ces éléments en vrac, à les transférer et à les distribuer un à un se pose dans de nombreux domaines d'application et en particulier lors de l'ensemencement, notamment de l'ensemencement de mottes de compost. Ces mottes sont produites sur une machine dite presse-mottes constituent un milieu de germination de qualité exceptionnelle pour les graines maraîchères et florales. La principale difficulté de cette technique réside dans la mise en place des graines dans les mottes de compost. En effet, il est nécessaire que chaque motte produite par le presse-mottes reçoive avec certitude une graine, et une seule.

Un appareil connu utilisé pour l'ensemencement de mottes de compost comprend une aiguille creuse présentant, au voisinage de son extrémité libre, une ouverture de section inférieure à la taille des graines à saisir, cette aiguille étant engagée dans un récipient dans lequel les graines sont maintenues en suspension dans de l'air. Sous l'effet d'une dépression établie à l'intérieur de l'aiguille, les graines sont attirées contre l'ouverture de l'aiguille. Toutefois, il s'avère que la probabilité de saisir une graine et une seule à la fois à l'aide de l'aiguille de cet appareil connu n'est pas satisfaisante. En effet, compte tenu du fait que les graines sont en suspension dans de l'air dans le récipient, il arrive qu'aucune graine ne s'accroche à l'ouverture de l'aiguille ou alors que plusieurs graines s'accrochent autour de l'ouverture de l'aiguille. Dans un cas comme dans l'autre, il en résulte un ensemencement imparfait des mottes.

Dans un autre appareil connu utilisé pour l'ensemencement de mottes de compost, les graines sont éparpillées sur une tôle et une aiguille creuse présentant une ouverture au voisinage de son extrémité libre est déplacée sur cette tôle, de sorte que sous l'effet de la dépression établie à l'intérieur de l'aiguille, les graines rencontrées par l'aiguille s'accrochent à l'ouverture de cette dernière. Dans cet appareil également, il arrive que l'aiguille ne rencontre pas de graine ou alors en rencontre plusieurs qui viennent s'accrocher autour de l'ouverture de l'aiguille. Afin d'empêcher que plusieurs graines puissent rester accrochées à l'aiguille, on fait ensuite passer cette dernière sur une arête destinée à retenir les graines en excès. Il s'avère cependant que cet appareil connu qui implique un guidage extrêmement précis de l'aiguille par rapport à l'arête de retenue ne permet pas non plus d'assurer qu'une graine, et une seule, reste accrochée chaque fois à l'aiguille.

Enfin, la demande de brevet français n° 80 06168 (EP-A-0 036 215) révèle un appareil d'ensemencement de mottes de compost comprenant au moins une aiguille creuse présentant une ouverture au voisinage de son extrémité libre et un tube coulissant sur l'aiguille et animé d'un mouvement rapide de vibrations sous l'action d'une commande à manivelle. Cet appareil permet une préhension et un transfert des graines une à une, avec une efficacité de presque 100 %. Néanmoins, cet appareil est d'une structure relativement compliquée impliquant un prix de revient élevé. De plus, tous les appareils connus ont un rendement relativement faible.

La présente invention a pour objet un procédé et un dispositif de préhension, de transfert et de distribution un à un d'éléments de très faible taille et notamment de graines à semer, permettant d'obtenir une efficacité de pratiquement 100 % et un rendement élevé moyennant une structure très simple et fiable permettant un prix de revient réduit.

Le dispositif conforme à l'invention comprend un organe de préhension creux mobile présentant au moins un trou de taille inférieure à la taille des éléments à saisir. Ce dispositif comprend, en outre, un bac renfermant une multitude d'éléments à saisir. Une source de vide est raccordée à l'organe de préhension. Des moyens sont prévus pour amener l'organe de préhension de la position de préhension des éléments à la position de distribution de ceux-ci, et inversement. Des moyens de vibrations sont prévus pour détacher de chaque trou de l'organe de préhension tous les éléments sauf celui qui, occupant une position centrale par rapport au trou, subit le plus fort effet de retenue. Ledit organe de préhension est solidaire du bac, et ledit bac est monté pivotant autour d'un axe horizontal. Lesdits moyens de transfert de la position de préhension des éléments à la position de distribution des éléments agissent sur ledit bac pour faire pivoter ce dernier autour dudit axe horizontal entre la position de préhension dans laquelle le bac est incliné de manière que les éléments en vrac se trouvent en contact avec l'organe de préhension, et une autre position inclinée du bac qui est la position de distribution dans laquelle lesdits éléments en vrac sont éloignés de l'organe de préhension dont chaque trou, grâce à une ouverture du bac, se trouve dans cette position de distribution en vis-à-vis d'un orifice d'évacuation d'une pièce de réception fixe. Les moyens de vibrations sont constitués par un vibrateur qui agit sur ledit bac pour détacher par inertie de chaque trou les éléments en excès.

Suivant un mode de réalisation préféré, le dispositif comprend une base montée pivotante autour dudit axe d'articulation horizontal. Le bac renfermant les éléments en vrac, avec l'organe de préhension solidaire du bac, est monté pivotant autour d'un autre axe d'articulation de préférence horizontal sur cette base. Les moyens pour amener l'organe de préhension de la position de préhension à la position de distribution, et inversement, agissent sur la base, pour faire pivoter cette dernière. Le vibrateur comprend un moteur monté sur ladite base et un organe de sortie qui agit sur le bac.

Le vibrateur peut être avantageusement un mécanisme de percussion qui peut comprendre, entre la base et le bac pivotant sur ce dernier, un ressort ayant tendance à rapprocher le bac de la base, et une butée pour limiter ce rapprochement du bac de la base, l'organe de sortie du mécanisme de percussion étant alors réalisé de manière à éloigner le bac de la base, à l'encontre de l'action dudit ressort, avant de libérer le bac qui se trouve alors ramené par le ressort en direction de la base jusqu'à heurter la butée.

Suivant un autre mode de réalisation, le mécanisme de percussion comprend, entre la base et le bac, un ressort cherchant à éloigner le bac de la base, et une butée pour limiter ce mouvement d'éloignement du bac de la base, l'organe de sortie du mécanisme de percussion étant, dans ce cas, réalisé de manière à rapprocher le bac de la base à l'encontre de l'action dudit ressort, avant de le libérer de sorte que le bac se trouve éloigné de la base par le ressort jusqu'à heurter la butée.

De nombreux modes de réalisation sont possibles en ce qui concerne l'organe de sortie du mécanisme de percussion. Cet organe de sortie peut, par exemple, adopter la forme d'une roue à rochet, d'un plateau à excentrique ou à manivelle, etc.

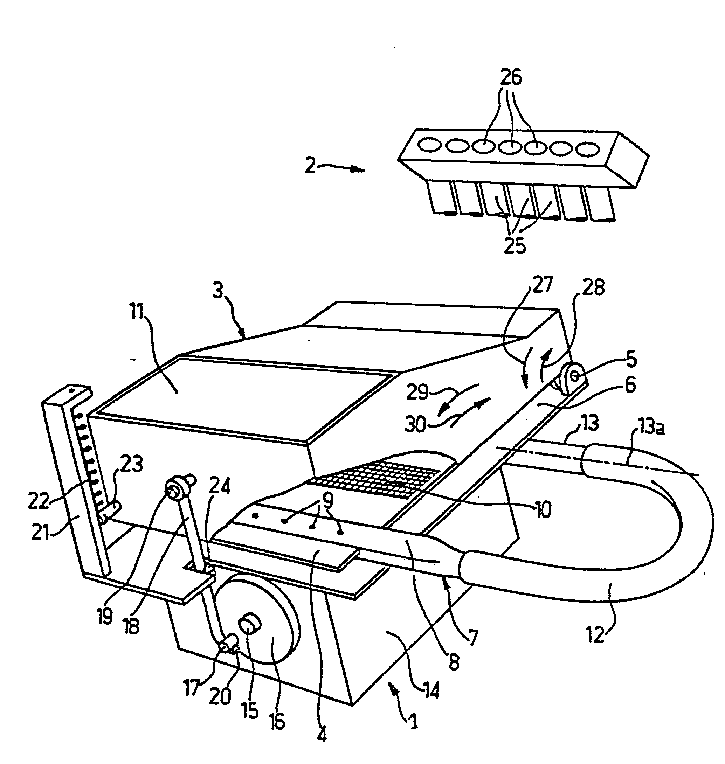

En se référant au dessin annexé, on va décrire ci-après plus en détail un mode de réalisation illustratif et non limitatif de l'objet de l'invention.

La figure unique du dessin est une vue en perspective d'un dispositif de préhension, de transfert et de distribution une à une de graines, par exemple en vue de l'ensemencement de mottes de compost à la sortie d'un presse-mottes.

Le dispositif de préhension, transfert et de distribution de graines de semences tel qu'illustré par la figure unique comprend une partie mobile de préhension et de transfert 1 et une partie fixe de réception 2.

La partie mobile de préhension et de transfert 1 comprend un bac 3 de forme sensiblement parallélépipédique, servant à recevoir en vrac les graines à distribuer. Le bac 3 qui présente une hauteur relativement faible par rapport à sa longueur et sa largeur est articulé au voisinage d'un bord transversal de son fond 4, par un axe 5 horizontal parallèle audit bord, sur une base 6.

Au voisinage du bord transversal opposé du fond 4, une rampe 7 creuse est incorporée au fond 4 de manière à s'étendre sur toute la largeur du fond 4. La rampe 7 présente, sur toute sa longueur, une face supérieure plane qui se trouve exactement dans le même plan que la face supérieure du fond 4 du bac 3. La face plane 8 de la rampe 7 est percée d'une rangée de trous 9 équidistants.

Le fond 4 du bac 3 comporte, par ailleurs, un tamis 10 situé entre la rampe 7 et l'axe d'articulation 5, au plus près de la rampe 7.

Le bac 3 est fermé sur les quatre côtés et sur le dessus, sauf au-dessus de la rampe 7 où le bac présente une ouverture 11 s'étendant sur toute la largeur du dessus du bac.

L'une des extrémités de la rampe 7 est fermée. Sur l'autre extrémité ouverte est engagée une extrémité d'un tuyau souple 12 dont l'autre extrémité est engagée sur un tuyau 13 fixé sous la base 11 en position horizontale, parallèlement à l'axe d'articulation 5. Le tube 13 qui dépasse la base 6 de part et d'autre forme ici deux tourillons par lesquels la base 6 est montée pivotante autour d'un axe 13a horizontal défini par l'axe du tube 13, sur un support fixe non représenté. Un système d'entraînement non représenté qui peut être de type quelconque (mécanique, pneumatique) est prévu pour faire pivoter la base 6 autour de l'axe 13a entre deux positions extrêmes.

La base 6 porte, sur le dessous, un moteur électrique 14 dont l'arbre de sortie 15 est parallèle à la base 6 et perpendiculaire à l'axe 13a. L'arbre de sortie 15 porte, au voisinage de l'extrémité transversale de la base 6 située du côté de la rampe 7, un plateau 16 portant un tourillon excentré 17 formant maneton.

Une tige 18 ayant son extrémité supérieure articulée sur un pivot 19 qui fait saillie sur la face extérieure de la paroi transversale du bac 3 opposée à l'axe d'articulation 5 s'étend vers le bas à travers une échancrure de la base 6. L'extrémité inférieure 20 de la tige 18 est coudée de telle manière que lors de la rotation du plateau 16 dans un sens, en l'occurrence dans le sens contraire des aiguilles d'une montre sur le dessin, le tourillon 17 du plateau 16 entraîne l'extrémité coudée 20 de la tige 18 vers le bas avant de la relâcher.

La base 6 porte, par ailleurs, une potence 21 faisant saillie vers le haut, à laquelle est accrochée une extrémité d'un ressort de traction 22 dont l'autre extrémité est accrochée à un doigt 23 faisant saillie sur la même paroi transversale du bac 3 que le pivot 19.

Le ressort 22 a donc tendance à écarter le bac 3 de la base 6, par pivotement autour de l'axe d'articulation 5.

Pendant la rotation du moteur 14, le tourillon 17 entraîne, à chaque tour, la tige 18 de manière à rapprocher le bac 3 de la base 6, par pivotement autour de l'axe d'articulation 5, en armant le ressort 22, et le ressort 22 écarte de nouveau le bac 3 de la base 6 dès que le tourillon 17 a relâché la tige 18. Cette dernière comporte, en dessous de la base 6, une butée 24 constituée par exemple par un écrou et un contre-écrou, cette butée 24 ayant pour fonction de limiter le mouvement d'écartement du bac 3 par rapport à la base 6 sous l'action du ressort 22.

La partie de réception 2 fixe comprend autant de tubes de réception et de distribution 25 que la rampe 7 comporte de trou 9. Ces tubes de réception 25 se terminent à leur extrémité supérieure par les orifices 26 disposés en une rangée horizontale parallèles à la rampe 7. Les orifices 26 ont un plus grand diamètre que les trous 9 de la rampe 7, mais l'entraxe des orifices 26 est identique à l'entraxe des trous 9.

Les orifices 26 des tubes de réception 25 sont inclinés et se trouvent dans une position telle par rapport à l'axe de pivotement 13a de la partie de préhension et de transfert 1 que la rampe 8 vienne s'appliquer, après un mouvement de pivotement de la partie de préhension et de transfert 1 autour de l'axe 13a dans le sens des aiguilles d'une montre sur le dessin au-delà de la position verticale, à plat sur les orifices 26 de manière que chaque trou 9 débouche dans l'un des tubes 25.

Un interrupteur de fin de course non représenté est en outre prévu, soit sur la partie fixe de distribution 2, soit sur la partie mobile de préhension et de transfert 1. Cet interrupteur de fin de course est actionné lorsque la partie mobile 1 a atteint la position de réception, la rampe 7 étant en contact avec les orifices 26. Cet interrupteur de fin de course, lorsqu'il est actionné, commande une vanne montée entre la source de vide non représentée et le tube 13.

On va décrire ci-après le fonctionnement du dispositif de préhension, de transfert et de distribution.

Le bac 3 étant chargé de graines en vrac devant être distribuées une à une, le moteur 14 est mis sous tension de manière à entraîner le plateau 16 en rotation dans le sens contraire des aiguilles d'une montre. A chaque tour, le tourillon excentré 17, lors de son mouvement de descente, entraîne vers le bas la tige 18, ce qui fait pivoter le bac 3 dans le sens de la flèche 27 autour de l'axe 5 par rapport à la base 6. Dès que le tourillon 17 lâche l'extrémité 20 de la tige 18, le bac 3 effectue, sous l'action du ressort 22, un mouvement de pivotement dans le sens de la flèche 28 autour de l'axe 5, mouvement qui est limité par le fait que la butée 24 de la tige 18 heurte la base 6. Ce mouvement de pivotement alterné, de faible amplitude, du bac 3 se traduit, au niveau de la rampe 7 qui se trouve à l'extrémité du bac 3 opposée à l'axe de pivotement 5, par une succession rapide de chocs qui, du fait que le bac 3 est propulsé par le ressort 22 de manière à éloigner la rampe 8 de la base 6, jusqu'à ce que la butée 24 de la tige 18 heurte la base 6, sont dirigés en opposition au sens de l'effet d'aspiration à travers les trous 9 de la rampe 7.

Par un mouvement de pivotement de la partie mobile 1 dans le sens de la flèche 29 autour de l'axe 13a, sous l'effet du mécanisme d'entraînement non représenté, la partie 1 est amenée jusqu'à la position de préhension illustrée par le dessin, position dans laquelle la partie 1 est légèrement inclinée par rapport à l'horizontale, de manière que l'extrémité du fond 4 du bac 3 à laquelle se trouve la rampe 7 soit située plus bas que l'extrémité opposée à laquelle se trouve l'axe de pivotement 5. Par conséquent, les graines contenues dans le bac 3 s'accumulent à l'extrémité du bac 3 à laquelle est située la rampe 8, en recouvrant cette dernière, de sorte qu'au moins une graine est attirée, par l'effet d'aspiration, contre chaque trou 9 de la rampe 7.

Sous l'action du mécanisme d'entraînement, le mouvement de pivotement de la partie 1 est ensuite inversé, c'est-à-dire que la partie 1 pivote dans le sens de la flèche 30 autour de l'axe 13a. Au début de ce mouvement de pivotement, les chocs imprimés à la rampe 7 vers le haut en opposition au sens de l'effet d'aspiration vers le bas par les trous 9 font que toutes les graines qui sont retenues par l'effet d'aspiration, sauf celle qui occupe une position centrale par rapport à chaque trou et subit ainsi un effet de retenue optimal par l'action du vide, se trouvent détachées par inertie de la rampe 7. Par conséquent, dès que la partie 1 a pivoté dans le sens de la flèche 30 au-delà de la position horizontale, toutes les graines en excès ainsi détachées de la rampe 7 parviennent, avec les autres graines en vrac, vers l'extrémité du bac 3 opposé à la rampe 7, seule une graine restant retenue à chaque trou 9.

A la fin du mouvement de pivotement dans le sens de la flèche 30, après franchissement de la position verticale, le bac 3 vient s'engager, grâce à son ouverture 11, sur la partie de réception fixe 2 de manière de la face 8 de la rampe 7 s'applique contre les orifices 26 des tubes 25. Le bac 3 étant ainsi immobilisé, le mouvement de pivotement de la base 6 continue encore jusqu'à ce que, la base 6 s'étend rapprochée du bac 3 à l'encontre de l'action du ressort 22, le tourillon 17 ne puisse plus agir sur la tige 18 et imprimer les chocs au bac 3, donc à la rampe 7. A ce moment, la base 6 actionne l'interrupteur de fin de course qui commande la vanne coupant la rampe 7 de la source de vide. Les graines retenues auparavant par aspiration aux trous 9 de la rampe 7 se détachent ainsi des trous 9 et tombent par gravité dans les tubes 25 dont chacun distribue une graine et une seule à la fois, par exemple dans une motte de compost à ensemencer.

La partie mobile 1 est ensuite ramenée par pivotement dans le sens de la flèche 29 autour de l'axe 13a à la position représentée, mouvement au cours duquel les graines passent sur la grille 10 qui permet le passage des poussières et autres impuretés de taille inférieure à la taille des graines, avant d'arriver sur la rampe 7 en vue de la préhension d'une nouvelle graine par chaque trou 9.

Bien entendu, pour pouvoir saisir une graine et une seule à la fois, le diamètre des trous 9 doit être adapté à la taille des graines à saisir. Il s'est avéré que la préhension des graines est optimale lorsque le diamètre des graines s'élève à environ 1,5 fois le diamètre des trous.

Il va de soi que le mode de réalisation décrit ci-dessus et représenté sur le dessin n'a été donné qu'à titre d'exemple illustratif et non limitatif et que de nombreuses modifications et variantes peuvent y être apportées.

Ainsi, des mécanismes autres que celui à excentrique et à échappement sont concevables pour imprimer à la rampe 7 une succession de chocs en opposition au sens de retenue des graines contre les trous de la rampe sous l'effet d'aspiration. A titre d'exemple, on peut mentionner les mécanismes à came, les mécanismes à roue à rochet, à excentrique sans échappement, etc. Cependant, le mécanisme représenté et décrit convient particulièrement pour le cas où la rampe 7 est solidaire du bac 3 mobile contenant les graines en vrac, du fait que ce mécanisme se « débraye » de lui-même au moment où les graines sont transférées de la rampe dans les tubes de réception et de distribution.

En outre, au lieu de faire heurter la rampe de préhension contre un organe de butée en opposition au sens dans lequel les graines sont retenues par l'effet d'aspiration contre les trous de la rampe, il serait possible de choisir la disposition inverse et de faire heurter un organe de percussion contre un organe de préhension dans le sens dans lequel les graines sont retenues par l'effet d'aspiration contre les trous de cet organe de préhension.

Enfin, l'utilisation d'autres vibrateurs agissant sur le bac est également possible.

L'organe de préhension, au lieu de présenter la forme d'une rampe à une rangée de trous, pourrait également présenter plusieurs rangées de trous pour permettre la préhension d'un plus grand nombre de graines.

Enfin, le dispositif conforme à l'invention n'est pas limité à la préhension, au transfert et à la distribution une à une de graines, mais peut être utilisé également pour tous autres éléments de très faible taille, à condition que ces éléments aient tous sensiblement la même forme et la même taille.

**Revendications**

1. Dispositif de préhension, de transfert et de distribution un à un d'éléments de très faible taille, notamment de graines à semer, comprenant un organe de préhension (7) creux mobile présentant au moins un trou (9) de taille inférieure à la taille des éléments à saisir, une source de dépression raccordée audit organe, un bac (3) renfermant en vrac une multitude d'éléments à saisir, et des moyens pour amener ledit organe de préhension d'une position de préhension des éléments à une position de distribution des éléments, et inversement, des moyens de vibrations étant prévus pour détacher de chaque trou (9) de l'organe de préhension (7) tous les éléments sauf celui qui, occupant une position centrale par rapport au trou, subit le plus fort effet de retenue, caractérisé par le fait que ledit organe de préhension (7) est solidaire du bac (3), que ledit bac est monté pivotant autour d'un axe horizontal (13a), que lesdits moyens de transfert de la position de préhension des éléments à la position de distribution des éléments agissent sur ledit bac pour faire pivoter ce dernier autour dudit axe horizontal (13a) entre la position de préhension dans laquelle le bac est incliné de manière que les éléments en vrac se trouvent en contact avec l'organe de préhension, et une autre position inclinée du bac qui est la position de distribution dans laquelle lesdits éléments en vrac sont éloignés de l'organe de préhension dont chaque trou (9), grâce à une ouverture (11) du bac, se trouve dans cette position de distribution en vis-à-vis d'un orifice (26) d'évacuation d'une pièce de réception (2) fixe, et que les moyens de vibrations sont constitués par un vibrateur (14-23) qui agit sur ledit bac (3) pour détacher par inertie de chaque trou les éléments en excès.

2. Dispositif suivant la revendication 1, caractérisé par le fait qu'il comprend une base (6) montée pivotante autour dudit axe horizontal (13a), que ledit bac (3) est monté pivotant autour d'un axe horizontal (5) sur ladite base, et que le vibrateur comprend un moteur (14) monté sur ladite base (6) et dont l'organe de sortie (15, 16, 17) agit sur ledit bac (3).

3. Dispositif suivant la revendication 1 ou 2, caractérisé par le fait que le vibrateur comprend un mécanisme de percussion imprimant au bac (3) une succession de chocs sensiblement en opposition au sens dans lequel les éléments sont retenus par aspiration contre les trous.

4. Dispositif suivant la revendication 3, caractérisé par le fait qu'il comprend, en outre, un ressort entre ladite base et ledit bac, ressort tendant à rapprocher le bac de la base, et une butée pour limiter ledit rapprochement du bac de la base, et que l'organe de sortie du mécanisme de percussion agit sur ledit bac dans le sens d'un éloignement de ce dernier de la base, à l'encontre de l'action dudit ressort, et libère ensuite le bac pour permettre audit ressort de faire heurter le bac contre ladite butée.

5. Dispositif suivant la revendication 3, caractérisé par le fait qu'il comprend, entre ladite base et ledit bac, un ressort (22) ayant tendance à éloigner ledit bac de ladite base, et une butée (24) pour limiter ledit mouvement d'éloignement du bac de la base, et que l'organe de sortie (15, 16, 17) du mécanisme de percussion agit sur ledit bac de manière à rapprocher ce dernier de la base, à l'encontre de l'action dudit ressort, pour le libérer ensuite pour permettre audit ressort de faire heurter ladite butée contre ledit bac.

6. Dispositif suivant l'une quelconque des revendications 1 à 5, caractérisé par le fait que ledit organe de préhension (7) se trouve au voisinage d'une extrémité dudit bac (3) opposée à l'extrémité à laquelle est situé l'axe horizontal (5) d'articulation du bac (3) sur la base (6).

**Claims**

1. Device for gripping, transferring and distributing very small elements one by one, namely sowing seeds, comprising a hollow, mobile gripping part (7) having at least one hole (9) smaller in size than the elements to be grasped, a source of pressure connected to the said part, a container (3) containing in bulk a multitude of elements to be grasped, and means for bringing the said gripping part from a position of gripping the elements to a position of distributing the elements, and inversely, vibration means being provided for detaching from each hole (9) the gripping part (7) all the elements except that which, occupying a central position in relation to the hole, undergoes the greatest retaining effect, characterized by the fact that the said gripping part (7) is integral with the container (3), that the container is mounted so that it can pivot around a horizontal axis (13a), that the said means of transfer from the position of gripping the elements to the position of distributing the elements act on the said container to make the latter pivotaround the said horizontal axis (13a) between the gripping position in which the container is inclined in such a way that the elements in bulk are located in contact with the gripping part and one other inclined position of the container which is the position of distribution in which the said elements in bulk are withdrawn from the gripping part, each hole (9) of which, due to an opening (11) of the container, is located in this position of distribution facing a discharge opening (26) of a fixed reception part (2) and that the vibration means are constituted by a vibrator (14-23) which acts on the said container (3) for detaching by inertia the elements in excess from each hole.

2. Device according to claim 1, characterized by the fact that it comprises a base (6) mounted so that it can pivot around the said horizontal axis (13a), that the said container (3) is mounted so that it can pivot around one horizontal axis (5) on the said base and that the vibrator comprises a motor (14) mounted on the said base (6) and the output part (15, 16, 17) of which acts on the said container (3).

3. Device according to claim 1 or 2, characterized by the fact that the vibrator comprises a percussion mechanism impressing on the container (3) a succession of shocks substantially in opposition to the direction in which the elements are retained by suction against the holes.

4. Device according to claim 3, characterized by the fact that it further comprises a spring between the said base and the said container, the spring tending to make the container approach the base and an abutment for restricting the said approaching of the container to the base, and that the output part of the percussion mechanism acts on the said container in the direction of a withdrawal of the latter from the base, against the action of the said spring, and then releases the container for permitting the said spring to strike the container against the said abutment.

5. Device according to claim 3, characterized by the fact that it comprises, between the said base and the said container, a spring (22) having the tendency to withdraw the said container from the said base and an abutment (24) for restricting the said movement of withdrawal of the container from the base and that the output part (15, 16, 17) of the percussion mechanism acts on the said container in such a way as to make the latter approach the base, against the action of the said spring, to release it then to permit the said spring to make the said abutment strike against the said container.

6. Device according to one of the claims 1 to 5, characterized by the fact that the said gripping part (7) is located in the vicinity of one end of the said container (3) facing the end where the horizontal hinge pin (5) of the container (3) on the base (6) is situated.

**Patentansprüche**

1. Vorrichtung zum Einzelergreifen, -überführen und -verteilen von Elementen mit sehr kleinen Abmessungen, insbesondere von Saatgutkörnern, mit einem hohlen, beweglichen Greiforgan (7) mit wenigstens einem Loch (9), dessen Abmessung kleiner ist als die Abmessungen der zu ergreifenden Elemente, mit einer mit dem Greiforgan verbundenen Unterdruckquelle, mit einem Kasten (3), der eine Vielzahl der zu ergreifenden Elemente als ungeordnetes Schüttgut enthält, sowie mit Mitteln zum Überführen des Greiforgans aus einer Greifposition, in der die Elemente ergriffen werden, in eine Verteilposition, in der sie verteilt werden, und umgekehrt, wobei Vibrationsmittel vorgesehen sind, die dazu dienen, aus jedem Loch (9) des Greiforgans (7) alle Elemente mit Ausnahme desjenigen zu entfernen, das eine zentrale Position relativ zu dem Loch besetzt und deshalb der stärksten Haltewirkung unterliegt, dadurch gekennzeichnet, daß das Greiforgan (7) fest mit dem Kasten (3) verbunden ist, daß der Kasten um eine horizontale Achse (13a) schwenkbar montiert ist, daß die Mittel zum Überführen aus der Greifposition in die Verteilposition auf den Kasten einwirken, um diesen um die genannte horizontale Achse (13a) zwischen der Greifposition, in der er derart geneigt ist, daß die als Massengut vorliegenden Elemente sich in Kontakt mit dem Greiforgan befinden, und einer anderen Neigungsposition zu verschwenken, die die Verteilposition bildet, in der die als Schüttgut vorliegenden Elemente von dem Greiforgan entfernt werden, wobei jedes Loch (9) des Greiforgans sich dank einer Öffnung (11) in dem Kasten in dieser Verteilposition einer Evakuierungsöffnung eines festen Empfangsteils (2) gegenüber befindet, und daß die Vibrationsmittel aus einem Vibrator (14-33) bestehen, der auf den Kasten (3) derart einwirkt, daß die überschüssigen Elemente von jedem Loch aufgrung der Massenträgheit entfernt werden.

2. Vorrichtung nach Anspruch 1, dadurch gekennzeichnet, daß sie eine um die genannte horizontale Achse (13a) schwenkbar montierte Basis (6) umfaßt, daß der Kasten (3) auf dieser Basis um eine horizontale Achse (5) schwenkbar montiert ist und daß der Vibrator einen Motor (14) umfasst, der auf der Basis (6) montiert ist und dessen Ausgangsorgan (15, 16, 17) auf den Kasten (3) einwirkt.

3. Vorrichtung nach Anspruch 1 oder 2, dadurch gekennzeichnet, daß der Vibrator einen Stoßmechanismus umfaßt, der den Kasten mit einer Folge von Stößen beaufschlagt, die in einer Richtung verlaufen, die der Richtung, in der die Elemente durch Ansaugen gegen die Löcher gehalten werden, im wesentlichen entgegengesetzt ist.

4. Vorrichtung nach Anspruch 3, dadurch gekennzeichnet, daß zwischen der Basis und dem Kasten eine Feder angeordnet ist, die den Kasten in Richtung auf eine Annäherung an die Basis vorspannt, daß ein Anschlag vorgesehen ist, der die Annäherung des Kastens an die Basis begrenzt, und daß das Ausgangsorgan des Stoßmechanismus gegen die Wirkung der Feder auf den Kasten in Richtung eines Entfernens von der Basis einwirkt und anschließend daran den Kasten freigibt, derart, daß die Feder die Basis gegen den genannten Anschlag stößt.

5. Vorrichtung nach Anspruch 3, dadurch gekennzeichnet, daß zwischen der Basis und dem Kasten eine Feder (22) angeordnet ist, die den Kasten in Richtung auf eine Entfernung von der Basis vorspannt, daß ein Anschlag (24) vorgesehen ist, der das Entfernen des Kastens von der Basis begrenzt, und daß das Ausgangsorgan (15, 16, 17) des Stoßmechanismus gegen die Wirkung der Feder auf den Kasten in Richtung einer Annäherung an die Basis einwirkt und anschließend daran den Kasten freigibt, derart, daß die Feder die Basis gegen den genannten Anschlag stößt.

6. Vorrichtung nach einem der Ansprüche 1 bis 5, dadurch gekennzeichnet, daß das Greiforgan (7) sich in der Nähe eines Endbereichs des Kastens (3) befindet, der demjenigen Endbereich entgegengesetzt ist, an dem sich die horizontale Schwenkachse (5) des Kastens (3) an der Basis (6) befindet.